(19) Europäisches Patentamt
European Patent Office
Office européen des brevets

(11) **EP 2 093 486 A2**

(12) **EUROPEAN PATENT APPLICATION**

(43) Date of publication:
**26.08.2009 Bulletin 2009/35**

(51) Int Cl.:
***F23N 1/00*** *(2006.01)* ***F23N 5/24*** *(2006.01)*

(21) Application number: **08014995.8**

(22) Date of filing: **25.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.02.2008 TW 97105957**

(71) Applicant: **Grand Mate Co., Ltd.**
**Taichung, Taiwan**
**R.O.C. (TW)**

(72) Inventors:
• **Huang, Chin-Ying**
**E. District**
**Taichung (TW)**
• **Huang, Hsin-Ming**
**E. District**
**Taichung (TW)**
• **Yen, Chung-Sheng**
**Taichung County 412 (TW)**

(74) Representative: **Becker Kurig Straus**
**Patentanwälte**
**Bavariastrasse 7**
**80336 München (DE)**

(54) **Gas flow rate control valve**

(57)    A gas flow rate control valve (10, 12, 14) includes a lower valve block (20, 20A, 20B) defining a gas flow passage (22), and an upper valve block (30, 30A, 30B) having a tube (32) disposed in communication with the gas flow passage (22), and a solenoid coil assembly (34) surrounding the tube (32) for generating a magnetic field. A magnetic column (40, 40A, 40B) has a magnetic portion (42, 42B) inserted into the tube (32) and axially movable by the magnetic field generated by the solenoid coil assembly (34), and a stopper (44, 44B) movable with the magnetic portion (42, 42B) to change the open cross-sectional area of the gas flow passage (22) so as to control the flow rate of the fuel gas passing through the gas flow passage (22). A spring member (50, 50B, 60) is provided at one of the top and bottom sides of the magnetic column (40, 40A, 40B) to keep the magnetic column (40, 40A, 40B) in balance and to provide a return force to the magnetic column (40, 40A, 40B) after displacement of the magnetic column (40, 40A, 40B).

FIG.1

EP 2 093 486 A2

## Description

## BACKGROUND OF THE INVENTION

### 1. Field of the Invention

The present invention relates generally to gas equipments and more particularly, to a gas flow rate control valve for controlling the flow rate of a fuel gas accurately.

### 2. Description of the Related Art

Taiwan patent publication number M322516 discloses a gas flow rate control valve. According to this design, the gas flow rate control valve comprises a rotary gas supply control disk and a fixed gas supply control disk. The rotary gas supply control disk has multiple gas flow rate control holes that have different diameters. The fixed gas supply control disk has a guide hole. By means of selectively setting one gas flow rate control hole of the rotary gas supply control disk into communication with the guide hole of the fixed gas supply control disk, the fuel gas is allowed to pass through the gas flow rate control valve. By means of selectively shifting the gas flow rate control holes of the rotary gas supply control disk into communication with the guide hole of the fixed gas supply control disk, the gas flow rate is relatively regulated.

According to the aforesaid prior art design, the gas flow rate control is limited to the design of the gas flow rate control holes, i.e., the gas flow rate control holes allow regulation of the gas flow rate step by step, however they do not allow for linear gas flow rate control. This inconvenient gas flow rate control method cannot satisfy user's different demands. Further, when rotating the rotary gas supply control disk to regulate the gas flow rate, the supply of the fuel gas may be interrupted before alignment of the next gas flow rate control hole with the guide hole, resulting in flame failure. Therefore, this design of gas flow rate control valve is not safe in use.

Therefore, it is desirable to provide a gas flow rate control valve that eliminates the aforesaid problems.

## SUMMARY OF THE INVENTION

The present invention has been accomplished under the circumstances in view. It is the main objective of the present invention to provide a gas flow rate control valve, which directly controls adjustment of the open cross-sectional area of the gas flow passage subject to the amount of displacement of a magnetic column, achieving accurate gas flow rate control.

It is another objective of the present invention to provide a gas flow rate control valve, which has a simple structure that works positively.

To achieve these objectives of the present invention, the gas flow rate control valve comprises: a lower valve block, which defines a gas flow passage for the passing of a fuel gas, an upper valve block, which is fixedly mounted on a top side of the lower valve block and includes a tube disposed in communication with the gas flow passage, and a solenoid coil assembly surrounding the tube for generating a magnetic field, a magnetic column, which includes a magnetic portion inserted into the tube and axially movable in the tube by the magnetic field generated by the solenoid coil assembly, and a stopper movable with the magnetic portion to change an open cross-sectional area of the gas flow passage so as to further control a flow rate of the fuel gas passing through the gas flow passage, and a spring member provided at one of top and bottom sides of the magnetic column to keep the magnetic column in balance and to provide a return force to the magnetic column after a displacement of the magnetic column.

By means of controlling the solenoid coil assembly to generate a magnetic field and to further control the amount of displacement of the magnetic column, the open cross-sectional area of the gas flow passage is relatively adjusted, achieving accurate gas flow rate control. The linear relationship between the magnetic field generated by the solenoid coil assembly and the amount of displacement of the magnetic column assures accurate gas flow rate control. Further, the gas flow rate control valve has simple structure and positive working characteristics.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

## BRIEF DESCRIPTION OF THE DRAWING

The present invention will become more fully understood from the detailed description given herein below and the accompanying drawings which are given by way of illustration only, and thus are not limitative of the present invention, and wherein:

FIG. 1 is an exploded view of a gas flow rate control valve in accordance with a first embodiment of the present invention;

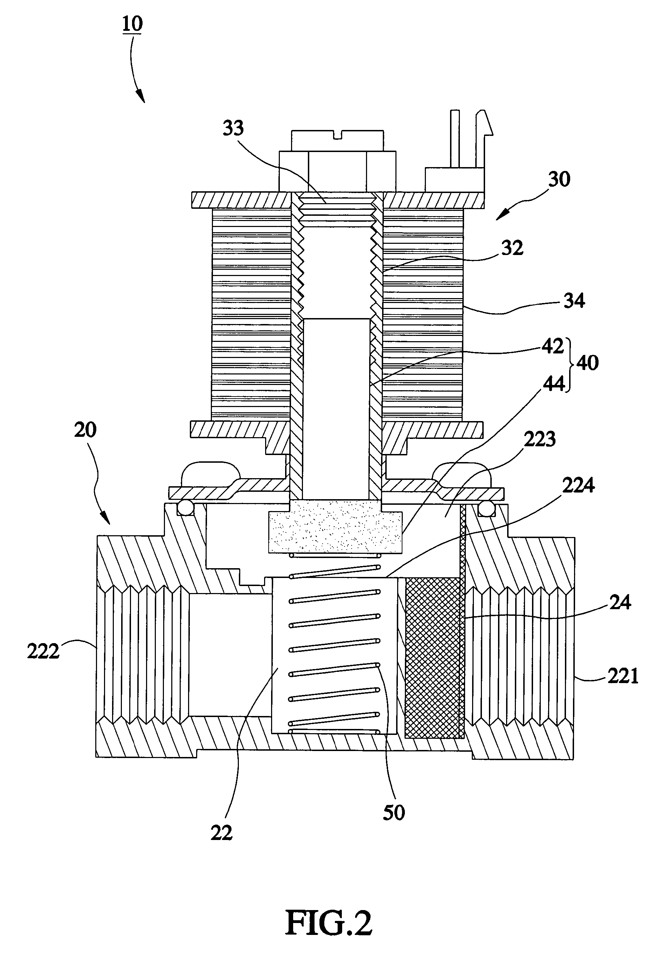

FIG. 2 is a sectional assembly view of the gas flow rate control valve in accordance with the first embodiment of the present invention;

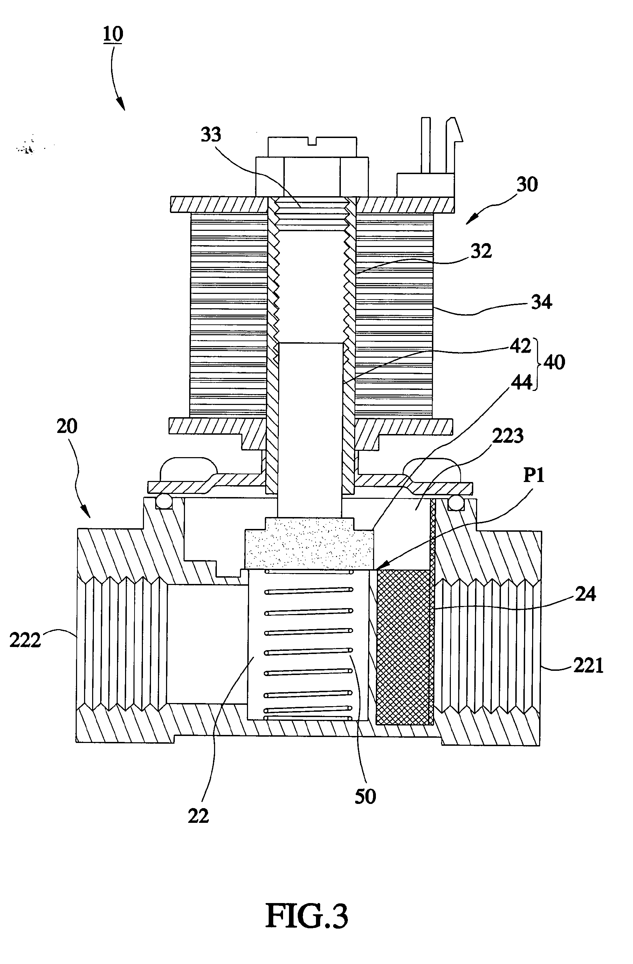

FIG. 3 is similar to FIG. 2 but showing the magnetic column moved;
FIG. 4 is a sectional assembly view of a gas flow rate control valve in accordance with a second embodiment of the present invention;
FIG. 5 is similar to FIG. 4 but showing the magnetic column moved;
FIG. 6 is a sectional assembly view of the gas flow rate control valve in accordance with a third embodiment of the present invention, and
FIG. 7 is similar to FIG. 6 but showing the magnetic column moved.

## DETAILED DESCRIPTION OF THE INVENTION

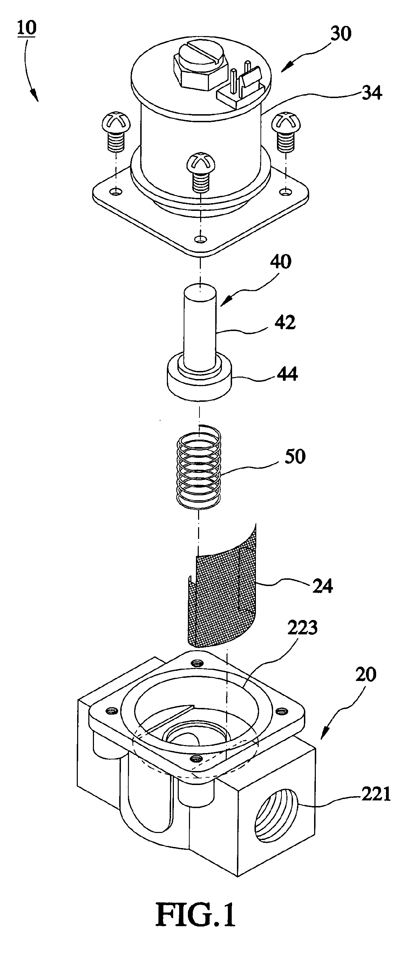

Referring to FIG. 1, a gas flow rate control valve **10** in accordance with a first embodiment of the present invention is shown comprised of a lower valve block **20**, an upper valve block **30**, a magnetic column **40**, and a spring member **50**.

The lower valve block **20** comprises a gas flow passage **22** for the passing of a fuel gas. The gas flow passage **22** comprises a gas inlet **221**, a gas outlet **222**, a communication hole **224** between the gas inlet **221** and the gas outlet **222**, and an opening **223** located above the communication hole **224**. The inlet **221** is for letting the fuel gas go into the inside of the lower valve block **20**. The outlet **221** is for letting the fuel gas to out of the lower valve block **20**. The opening **223** is in communication with a middle part of the passage **22** and located at the top side of the lower valve block **20**. Normally, the fuel gas flows through the gas inlet **221** to the opening **223** and then flows through the communication hole **224** and then the gas outlet **222** to the outside of the lower valve block **20**. The lower valve block **20** further comprises a filter gauze **24** mounted in the middle part of the gas flow passage **22** between the gas inlet **221** and the gas outlet **223** to remove solid matters from the fuel gas passing through the lower valve block **20**.

The upper valve block **30** comprises a tube **32**, a seal **33**, and a solenoid coil assembly **34** surrounding the tube **32**. The upper valve block **30** is fixedly fastened to the top side of the lower valve block **20** to block the opening **223**. The tube **32** is kept in communication with the opening **223** of the gas flow passage **22** and located above and aligned with the communication hole **224** for accommodating the magnetic column **40**. The seal **33** seals the top side of the tube **32** to prevent gas leakage. The solenoid coil assembly **34** surrounds the tube **32**. When electrically conducted, the solenoid coil assembly **34** will generate a magnetic field to move the magnetic column **40**. When the electric current to the solenoid coil assembly **34** is increased, the intensity of the magnetic field generated by the solenoid coil assembly **34** will become stronger, i.e., the attractive force produced by the solenoid coil assembly **34** to move the magnetic column **40** will become greater. Further, changing the direction of the current inputted to the solenoid coil assembly **34** causes change of the polarity of the magnetic field, and the direction of the force applied to the magnetic column **40** is reversed.

The magnetic column **40** comprises a magnetic portion **42** and a stopper **44**. The magnetic portion **42** is formed of a permanent magnet. The stopper **44** is made of rubber and affixed to the bottom side of the magnetic portion **42**. The magnetic portion **42** is inserted into the tube **32** within the working range of the solenoid coil assembly **34**. Therefore, the magnetic portion **42** can be moved up and down in the tube **32**. Because two reversed polarities (S pole and N pole) are produced at two opposite sides relative to the reference line at the center of the solenoid coil assembly **34** when the solenoid coil assembly **34** is electrically conducted, the top side of the magnetic portion **42** is normally kept at the elevation below the center of the solenoid coil assembly **34** for enabling the polarity at the top side of the magnetic column **40** to be driven by the solenoid coil assembly **34**. Subject to the effect of the magnetic field of the solenoid coil assembly **34** acted upon the magnetic portion **42**, the magnetic column **40** is moved axially along the tube **32**. During displacement of the magnetic column **40** along the tube **32**, the stopper **44** relatively changes the open ratio of the communication hole **224** of the gas flow passage **22**, thereby regulating the flow rate of the fuel gas passing through the communication hole **224**. When the magnetic column **40** is moved to a close position **P1**, the stopper **44** blocks the entire gas flow passage **22**, and the fuel gas is prohibited from passing through the lower valve block **20**.

The spring member **50** is a compression spring that can be mounted on one of the top and bottom sides of the magnetic column **40**. According to this embodiment, the spring member **50** is provided at the bottom side of the magnetic column **40**, so that the gas flow rate control valve **10** is a normal open valve. The spring member **50** extends in the axial direction of the magnetic column **40** to keep the magnetic column **40** in balance and to provide a return force to the magnetic column **40** after each displacement of the magnetic column **40**.

Based on the aforesaid structure, the solenoid coil assembly **34** does not generate any magnetic field when it is not electrically conducted; the stopper **44** of the magnetic column **40** is lifted by the spring member **50** for allowing the fuel gas to pass through the gas flow passage **22** of the lower valve block **20,** and the top side of the magnetic portion **42** is normally kept below the elevation of the center of the solenoid coil assembly **34**. When electric current goes through the solenoid coil assembly **34**, the solenoid coil assembly **34** generates a magnetic field. If the polarity at the bottom side of the solenoid coil assembly **34** is same as the polarity at the top side of the magnetic portion **42** of the magnetic column **40**, the magnetic portion **42** of the magnetic column **40** will be forced downwards by the magnetic repulsive force. At this time, the ratio of the open cross-sectional area of the communication hole **224** is relatively reduced, and therefore the flow rate of the fuel gas is relatively reduced. When the user regulates the amount of the electric current passing through the solenoid coil assembly **34** through an operating interface, the intensity of the magnetic filed generated by the solenoid coil assembly **34** will be relatively adjusted, and the magnetic portion **42** will be moved subject to the intensity of the magnetic field, achieving accurate gas flow rate control. When the magnetic force generated by the solenoid coil assembly **34** surpasses the spring force of the spring member **50**, the magnetic portion **42** is forced downwards to the close position **P1** to block the gas flow passage **22** of the lower valve block **20**, stopping the fuel gas from passing through the lower valve block **20**.

Further, the cooperation between the spring member **50** and the permanent magnet of the magnetic portion **42** has another effect. For easy understanding of this effect, we hereinafter explain the relation of axial force balance between the spring member **50** and the permanent magnet of the magnetic column **40** as follows:

$$\Sigma F = 0 \qquad F_m - KX = 0 \;\rightarrow\; F_m = KX$$

Fm: Magnetic force of the solenoid coil assembly 34 acted upon the magnetic portion **42**;
K: Spring constant of the spring member **50**;
X: Amount of displacement of the magnetic column **40**.

Based on the aforesaid structure, inputting an electric current to the gas flow rate control valve **10** causes the solenoid coil assembly **34** to generate a magnetic field that controls the amount of displacement of the magnetic column **40**, thereby adjusting the open cross sectional area of the communication hole **224** of the gas flow passage **22** (the greater the X value is the smaller the open cross-sectional area will be), and therefore the desired gas flow rate control is achieved. Further, the magnetic portion **42** according to this embodiment is formed of a permanent magnet to have a small magnetic hysteresis. Therefore, there is a certain relationship between the value of the input current and the generated magnetic force, i.e., the rise curve and the decline curve are approximately equal in the input current-magnetic column **40** displacement relationship diagram. According to test, when an input current of a certain value causes an increase of a displacement and a reverse input current of the same value causes a decrease of a displacement, the error therebetween is below 3-5%. Therefore, the gas flow rate control valve **10** of the present invention has an accurate gas flow rate control characteristic. Further, when compared to conventional designs, the invention has simple structure and accurate action characteristics.

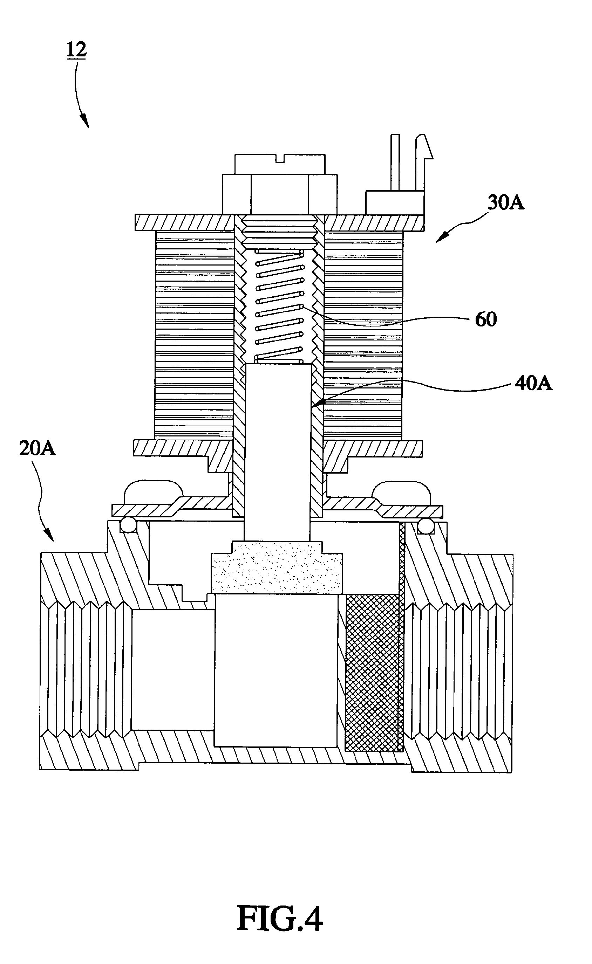

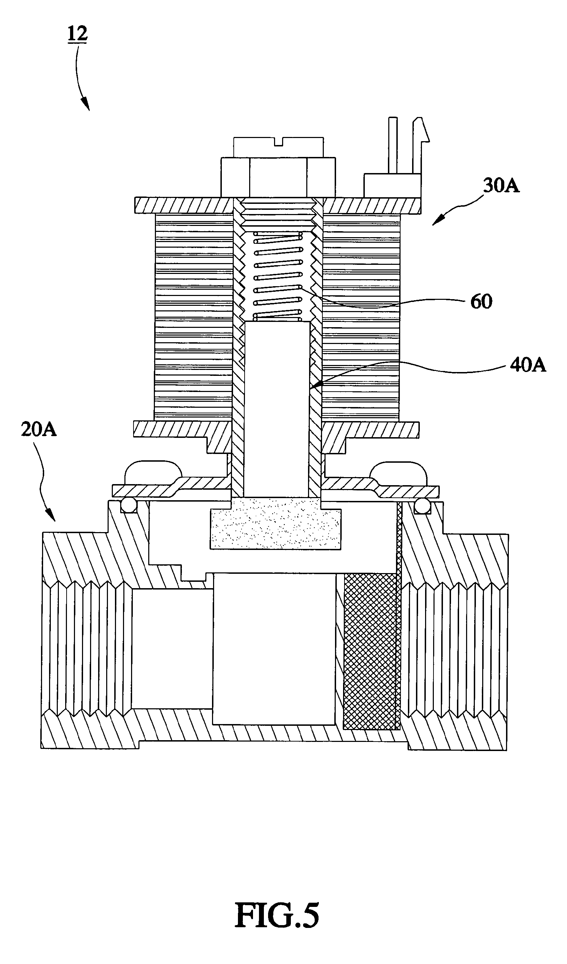

FIGS. 4 and 5 show a gas flow rate control valve **12** in accordance with a second embodiment of the present invention. Similar to the aforesaid first embodiment, the gas flow rate control valve **12** is comprised of a lower valve block **20A**, an upper valve block **30A**, a magnetic column **40A**, and a spring member **60**. According to this second embodiment, the spring member **60** is a compression spring provided at the top side of the magnetic column **40A**. The gas flow rate control valve **12** is a normal close valve. The spring member **60** extends in the axial direction of the magnetic column **40A** to keep the magnetic column **40A** in balance and to provide a return force to the magnetic column **40A** after each displacement of the magnetic column **40A**.

Based on the aforesaid arrangement, the working direction of the magnetic column **40A** is reversed to that of the aforesaid first embodiment. Therefore, this second embodiment achieves the same effects as the aforesaid first embodiment.

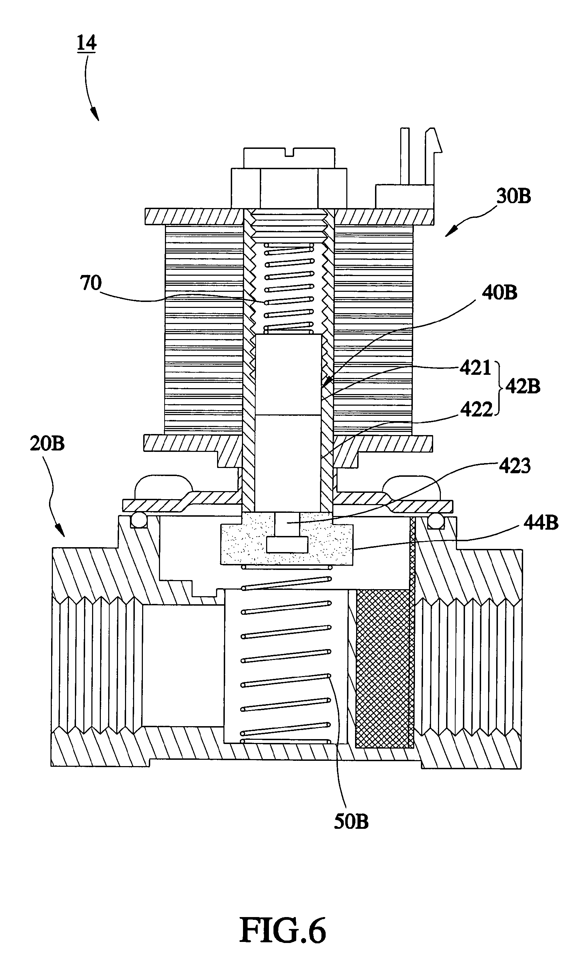

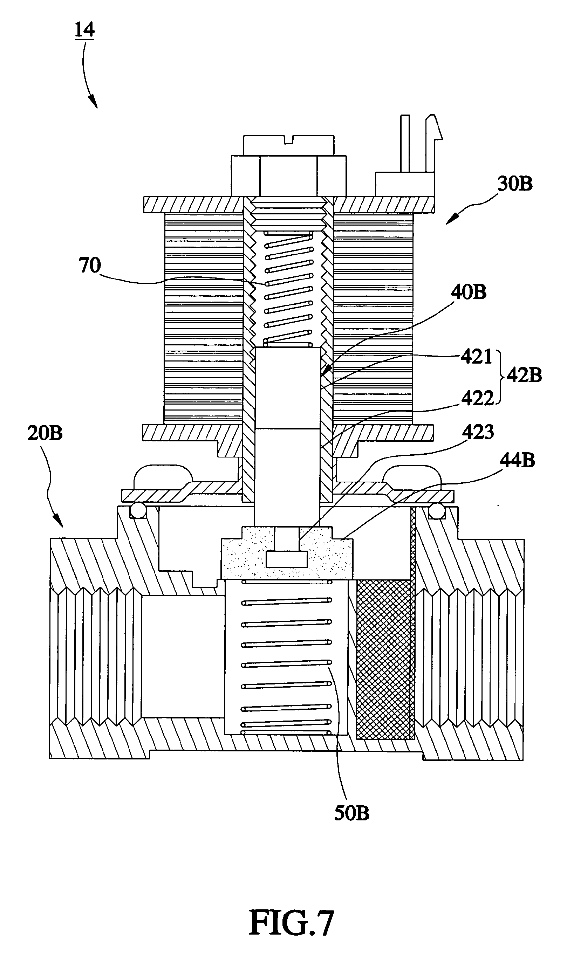

FIGS. 6 and 7 show a gas flow rate control valve **14** in accordance with a third embodiment of the present invention. Similar to the aforesaid first embodiment, the gas flow rate control valve **14** is comprised of a lower valve block **20B**, an upper valve block **30B**, a magnetic column **40B**, and a spring member **50B**. According to this embodiment, the magnetic portion **42B** of the magnetic column **40B** is comprised of a permanent magnet **421** and a magnetically conductive block **422**, and the stopper **44B** of the magnetic column **40B** is a rubber member capped on the bottom side of the magnetically conductive block **422**. This embodiment shows a different configuration of the magnetic column **40A**. The magnetically conductive block **422** is made of a ferrous material, having a bottom mounting bolt **423** for securing the rubber stopper **44B**. However, the design of the bottom mounting bolt **423** is not a limitation. The gas flow rate control valve **14** further comprises a supplementary spring member **70**. The supplementary spring member **70** and the spring member **50B** are respectively provided at the two opposite sides of the magnetic column **40B**. According to this embodiment, the spring member 50B is provided at the bottom side of the magnetic column **40B**, and the gas flow rate control valve **14** is a normal open valve; the supplementary spring member **70** is provided at the top side of the magnetic column **40B**; the supplementary spring member **70** and the spring member **50B** work in reversed directions, providing a force to move the magnetic column **40B**. Further, the force of the supplementary spring member **70** is smaller than the force of the spring member **50B**.

Subject to the aforesaid arrangement, the supplementary spring member **70** assists the gas flow rate control valve **14** in regulating the force relative to the magnetic column **50B** so that the control of the gas flow rate control valve **14** is close to a linear control, assuring accurate control of the gas flow rate. Therefore, this third embodiment achieves the same effects as the aforesaid first and second embodiments.

It is to be understood that the top side of the magnetic portion **42** according to the first embodiment is normally disposed below the elevation of the center of the solenoid coil assembly **34**, assuring the magnetic pole at the top side of the magnetic column **40** to be positively driven by the solenoid coil assembly **34**; on the contrary, the bottom side of the magnetic portion **42** can be normally disposed above the elevation of the center of the solenoid coil assembly **34**, assuring the magnetic pole at the bottom side of the magnetic column **40** to be positively driven by the solenoid coil assembly **34**.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. A gas flow rate control valve (10, 12, 14) comprising:

   a lower valve block (20, 20A, 20B) having a gas flow passage (22) for the passing of a fuel gas; an upper valve block (30, 30A, 30B) fixedly mounted on a top side of the lower valve block (20, 20A, 20B), the upper valve block (20, 20A, 20B) including a tube (32) disposed in communication with the gas flow passage (22), and a solenoid coil assembly (34) surrounding the tube (32) for generating a magnetic field when the solenoid coil assembly (34) is electrically conducted,
   **characterized in that** :
   a magnetic column (40, 40A, 40B) having a magnetic portion (42, 42B) inserted into the tube (32) and axially movable in the tube (32) by the magnetic field generated by the solenoid coil assembly (34), the magnetic portion (42, 42B) is comprised of a permanent magnet (421), and a stopper (44, 44B) movable with the magnetic portion (42, 42B) to change an open cross-sectional area of the gas flow passage (22) so as to control a flow rate of the fuel gas passing through the gas flow passage (22); and
   a spring member (50, 50B, 60) provided at one of top and bottom sides of the magnetic column (40, 40A, 40B) and extending in an axial direction of the magnetic column (40, 40A, 40B) to keep the magnetic column (40, 40A, 40B) in balance and to provide a return force to the magnetic column (40, 40A, 40B).

2. The gas flow rate control valve (10, 12, 14) as claimed in claim 1, wherein the magnetic portion (42, 42B) further comprises a magnetically conductive block (422).

3. The gas flow rate control valve (10, 12, 14) as claimed in claim 1, wherein the magnetic portion (42, 42B) has a top side normally disposed below an elevation of a center of the solenoid coil assembly (34).

4. The gas flow rate control valve (10, 12, 14) as claimed in claim 1, wherein the lower valve block (20, 20A, 20B) further comprises a filter gauze (24) mounted in the gas flow passage (22).

5. The gas flow rate control valve (10, 12, 14) as claimed in claim 1, wherein the spring member (50, 50B, 60) is a compression spring provided at the bottom side of the magnetic column (40, 40A, 40B), such that the gas flow rate control valve (10, 12, 14) is in a normal open manner.

6. The gas flow rate control valve (10, 12, 14) as claimed in claim 1, wherein the spring member (50, 50B, 60) is a compression spring provided at the top side of the magnetic column (40, 40A, 40B), such that the gas flow rate control valve (10, 12, 14) is in a normal close manner.

7. The gas flow rate control valve (10, 12, 14) as claimed in claim 1, further comprising a supplementary spring member (70) provided at one of the top and bottom sides of the magnetic column (40, 40A, 40B) opposite to the spring member (50, 50B, 60); the supplementary spring member (70) and the spring member (50, 50B, 60) work in reversed directions against each other.

8. The gas flow rate control valve (10, 12, 14) as claimed in claim 7, wherein the supplementary spring member (70) has a spring force smaller than that of the spring member (50, 50B, 60).

9. The gas flow rate control valve (10, 12, 14) as claimed in claim 1, wherein the magnetic portion (42, 42B) has a bottom side normally disposed above an elevation of a center of the solenoid coil assembly (34).

**FIG.1**

FIG.2

**FIG.3**

<u>12</u>

30A

60

40A

20A

# FIG.4

12

30A

60

40A

20A

**FIG.5**

**FIG.6**

FIG.7

**EP 2 093 486 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW M322516